# DEMANDE DE BREVET EUROPEEN

(11) **EP 0 994 285 A1**
(43) Date de publication de la demande: **19.04.2000**
(21) Numéro de dépôt: 99402113.7
(22) Date de dépôt: 25.08.1999
(51) Int. Cl.: F16L 5/00

(54) **Traversée tubulaire de cloison en biais**

(30) Priorité: 27.08.1998 FR 9810775
(71) Demandeur: Société JACOT, 25460 Etupes (FR)
(72) Inventeur: Amiri, Richard, 25200 Montbelliard (FR); Ploux, Philippe, 39100 Dole (FR); Legrand, Jacky, 25460 Etupes (FR)
(74) Mandataire: CABINET BONNET-THIRION

(57) **Abrégé**

Traversée tubulaire de cloison en biais, comportant un élément tubulaire (10) destiné à être fixé à la cloison (40) qui présente une ouverture (41) par laquelle l'élément tubulaire (10) la traverse lorsque la traversée est en place, des moyens portés par l'élément tubulaire (10) étant prévus pour le positionnement de l'élément tubulaire (10) et sa fixation : les moyens de positionnement et fixation sont constitués d'une collerette (13) ménagée sur au moins une partie de la surface extérieure de l'élément tubulaire (10) en étant inclinée par rapport aux génératrices de l'élément tubulaire (10), ladite collerette (13) définissant au moins une portée d'appui qui coopère avec le fond d'une creusure en étant adaptée à positionner l'élément tubulaire (10).

## Description

La présente invention concerne une traversée tubulaire de cloison en biais, plus précisément une traversée tubulaire traversant ladite cloison en étant en biais par rapport à celle-ci, c'est-à-dire faisant un certain angle avec elle qui n'est ni nul, ni droit.

De telles traversées en biais sont souvent utilisées lorsque l'espace disponible pour leur implantation est restreint ; de telles traversées présentent en effet l'avantage d'être peu encombrantes, par rapport notamment à des traversées orthogonales.

Par ailleurs, des traversées en biais sont utiles lorsque l'organe qui traverse la cloison doit faire un certain angle, généralement faible, avec celle-ci. Elles permettent d'éviter que l'organe qui traverse la cloison, qu'il soit mécanique ou fluidique, ne soit pas perturbé en traversant la cloison, notamment par des frottements qu'occasionnerait un cintrage plus ou moins prononcé d'une traversée non en biais, notamment orthogonale.

Un exemple de traversée en biais présentant ces caractéristiques est une traversée constituant un guide pour le câble de commande du frein de stationnement d'un véhicule automobile.

Une traversée tubulaire de cloison en biais comporte généralement un élément tubulaire destiné à être fixé à la cloison qui présente une ouverture par laquelle l'élément tubulaire la traverse lorsque la traversée est en place ; des moyens sont prévus pour le positionnement relatif de l'élément tubulaire.

Jusqu'à présent, ces moyens de positionnement consistent en un soudage de l'élément tubulaire, qui assure également la fixation de l'élément tubulaire, à la cloison ou à une patte de fixation intermédiaire, opération qui est onéreuse.

Selon le document US-A-5 211 695, les moyens de positionnement sont une gorge de forme ovale dont le fond coopère étroitement avec une ouverture de forme complémentaire ménagée dans la cloison elle-même ; ladite gorge est ménagée entre deux collerettes, le bord de l'une étant en biseau pour montage par clipsage de la traversée de cloison sur la cloison elle-même ; ainsi, nécessairement la traversée de cloison est en un matériau semi-rigide, tel qu'une matière plastique comme prévu dans le document, et exclut la possibilité de la réaliser en métal.

La présente invention a pour but de pallier ces inconvénients.

Selon l'invention, une traversée tubulaire de cloison en biais, comportant un élément tubulaire destiné à être fixé à la cloison qui présente une ouverture par laquelle l'élément tubulaire la traverse lorsque la traversée est en place, des moyens portés par l'élément tubulaire étant prévus pour le positionnement de l'élément tubulaire et sa fixation, les moyens de positionnement et fixation étant constitués d'une collerette ménagée sur au moins une partie de la surface extérieure de l'élément tubulaire en étant inclinée par rapport aux génératrices de l'élément tubulaire, ladite collerette définissant au moins une portée d'appui, est caractérisée par le fait que la portée d'appui coopère avec le fond d'une creusure en étant adaptée à positionner l'élément tubulaire.

De préférence, la fixation de l'élément tubulaire est obtenue par pincement de la collerette.

Avantageusement, la collerette est continue et fermée, en ce sens qu'elle est ménagée tout autour de l'élément tubulaire.

De préférence, la portée d'appui est plane.

Avantageusement, la profondeur de la creusure est globalement égale à la hauteur de la collerette.

Avantageusement, le contour périphérique intérieur de la creusure entoure la collerette en étant globalement de même forme.

De préférence, la creusure est ménagée dans la cloison autour de l'ouverture qu'elle présente, la collerette étant adaptée à être pincée entre la cloison et une bride.

En variante, la creusure est ménagée dans une patte dite de fixation, que comporte la traversée tubulaire, laquelle patte est traversée par l'élément tubulaire grâce à un orifice qu'elle présente et la collerette est pincée entre la patte de fixation et la cloison.

De préférence, l'orifice que présente la patte de fixation pour le passage de l'élément tubulaire est en biais et épouse la périphérie de l'élément tubulaire.

Il peut être utile, pour certaines applications, de prévoir une traversée tubulaire de cloison présentant une certaine étanchéité, au moins au suintement ; ainsi un joint d'étanchéité est prévu pour être interposé entre la traversée et la cloison : avantageusement, le joint comporte un passage en biais pour l'élément tubulaire.

Selon une forme préférée de réalisation, la patte de fixation est en forme de U dont les ailes sont prolongées selon des retours globalement parallèles à l'âme du U et dirigés vers l'extérieur dudit U, ladite patte de fixation étant fixée par lesdits retours à la cloison qu'elle est destinée à équiper.

De préférence, la creusure est ménagée dans l'âme du U.

L'élément tubulaire devant être fixe axialement et résister à des sollicitations axiales, comme par exemple dans l'application à un frein de stationnement citée ci-dessus, la patte de fixation doit être relativement rigide et donc être d'une épaisseur notable ; ainsi, de préférence, la patte de fixation est réalisée par emboutissage, sa rigidité étant alors optimale.

Avantageusement, l'épaisseur du joint au repos est légèrement supérieure à la hauteur des ailes du U ; de préférence, l'épaisseur du joint est telle qu'une fois serré il porte sur la périphérie de l'élément tubulaire ; de préférence, le joint recouvre la collerette de l'élément tubulaire et l'âme du U.

En variante, l'élément tubulaire présente également une autre collerette en biais coopérant avec la face extérieure de la patte de fixation, ici avec la face extérieure de sa creusure, en sorte que l'élément tubulaire est en quelque sorte solidarisé par sertissage à la patte de fixation.

L'élément tubulaire est constitué par le tube qui reçoit l'organe à guider, tel que le câble de frein de l'exemple ci-dessus ; lorsqu'une partie de ce tube est, par rapport à la cloison, dans un environnement agressif, et c'est le cas, dans l'exemple ci-dessus, de la partie du tube située en dehors de l'habitacle du véhicule, le tube doit être traité, et il l'est sur toute sa longueur, ce qui grève encore le prix de revient de la traversée tubulaire ; ainsi, avantageusement, l'élément tubulaire est un embout.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue en perspective de la traversée tubulaire selon l'invention ;
- la figure 2 est une vue en coupe de la traversée de la figure 1 ;
- la figure 3 est analogue à la figure 2, la traversée étant montée sur une cloison ;
- la figure 4 est une vue de côté de l'embout seul ;
- la figure 5 est une vue de côté du joint d'étanchéité seul ;
- la figure 6 est une vue selon la flèche VI de la figure 5 ;
- la figure 7 est une vue analogue à la figure 3 et montre une variante de traversée tubulaire ;
- la figure 8 est une vue analogue à la figure 3 et montre une autre variante de traversée tubulaire.

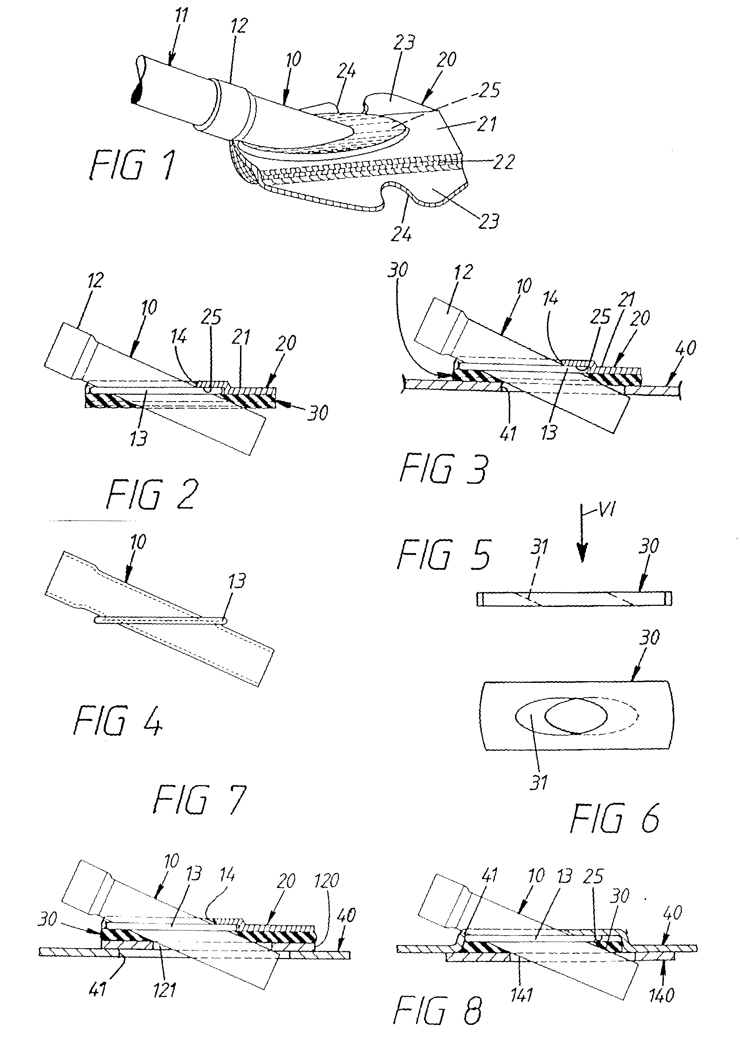

En se reportant aux figures, on voit que, selon l'invention, une traversée tubulaire de cloison en biais comporte un embout 10 auquel peut être raccordé un tube 11, figure 1, par sertissage en 12 ; globalement à mi-longueur, l'embout 10 présente une collerette 13 inclinée par rapport aux génératrices de l'embout 10 ; ici, la collerette 13 est continue et fermée, en étant ménagée tout autour de l'embout 10.

L'embout 10 et sa collerette 13 sont destinés à coopérer avec une patte de fixation 20.

Plus précisément, la patte de fixation 20 est, vue en coupe transversale, globalement en forme de U ayant une âme 21 et deux ailes 22, chacune des ailes 22 étant prolongée selon un retour 23 globalement parallèle à l'âme 21 du U en étant dirigé vers l'extérieur dudit U, la patte de fixation 20 étant destinée à être fixée à la cloison par lesdits retours 23, par exemple par des vis : on voit sur la figure 1 des échancrures 24 prévues en bordure des retours 23 pour le passage des tiges des vis.

Ici, l'âme 21 du U présente une creusure 25 et c'est avec le fond de cette creusure 25 qu'est amenée à coopérer la collerette 13 de l'embout 10, comme cela est visible sur la figure 2 ; sur les dessins, le fond de la creusure 25 et la collerette 13, tout au moins sa portée d'appui, sont planes mais bien entendu ils pourraient être galbés ; il en est d'ailleurs de même de l'âme 21 et des retours 23 de la patte de fixation 20 ; la creusure 25 comporte bien entendu un orifice 14 pour le passage de l'embout ; sur les dessins également, cet orifice 14 est droit : en variante, il est en biais et épouse la périphérie de l'embout 10.

On notera que la profondeur de la creusure 25 est globalement égale à la hauteur de la collerette 13 et que celle-ci s'inscrit dans celle-là, le contour périphérique intérieur de la creusure 25 entourant la collerette 13 en étant globalement de même forme.

La patte de fixation 20 est réalisée par emboutissage d'une tôle métallique, notamment en acier.

Ainsi, comme on le voit, l'embout 10 est parfaitement positionné par rapport à la patte de fixation 20, à la fois angulairement, d'un angle d'une vingtaine de degrés par exemple, et latéralement, lorsque la collerette 13 de l'embout 10 est plaquée contre le fond de la creusure 25, dans les conditions décrites ci-dessous ; la fixation de l'embout 10 est obtenue par pincement de la collerette 13 entre la patte de fixation 20 et la cloison 40.

En vue de rendre la traversée relativement étanche, au moins au suintement, un joint d'étanchéité 30 est interposé entre la traversée et la cloison 40, figure 3.

Le joint d'étanchéité 30, visible seul sur les figures 5 et 6, présente un passage 31, également en biais, pour l'embout 10 ; la section du passage 31 correspond à la surface extérieure de la section, parallèlement à la cloison, de l'embout 10 en dessous de la collerette 13, et le joint 30 s'étend, lorsqu'il est en place, au droit de l'âme 21 du U de la patte de fixation 20 en sorte qu'il recouvre la collerette 13 de l'embout 10 et l'âme 21 dudit U.

Comme le montre la figure 2, l'épaisseur du joint 30 au repos est légèrement supérieure à la hauteur des ailes 22 de la patte de fixation 20 : ainsi, lorsque la patte de fixation 20 est montée sur une cloison 40, figure 3, qui présente une ouverture 41 par laquelle l'embout 10 la traverse, le joint 30 est légèrement comprimé, ce qui conforte l'étanchéité, en enveloppant l'embout 10, jusqu'à porter sur la périphérie de l'embout.

Il est à noter que, dans une application à un véhicule automobile, la présence d'un joint tel que le joint 30 permet non seulement d'assurer la fonction désirée d'étanchéité mais également de filtrer les vibrations, dans une certaine mesure, voir même assurer une certaine isolation phonique.

Comme on l'aura compris, l'utilisation pour la traversée d'un embout de faible longueur minimise les frais de traitement anti-corrosion lorsque celui-ci est réalisé en métal non résistant à la corrosion, tel que de l'acier ordinaire par exemple, l'embout pouvant être raccordé à un tube 11 de plus grande longueur en acier non traité, lequel tube 11 s'étendant dans un milieu moins agressif, tel que l'habitacle d'un véhicule automobile dans l'exemple ci-dessus.

Il est à noter que, grâce à sa forme en U et à sa creusure 25, la rigidité de la patte de fixation 20 est assurée, celle-ci pouvant être réalisée dans une tôle d'épaisseur plus faible que si elle était plane, ce qui diminue encore le prix de revient de la traversée.

Dans la mesure où la liaison de l'embout 10 au tube 11 se fait par sertissage, l'embout 10 peut présenter à son extrémité, pour son raccordement, un rebord en saillie dont le diamètre est plus grand que la plus petite dimension de l'orifice 14 en sorte que l'embout 10 est prisonnier de la patte de fixation 20 grâce, d'un côté, audit rebord et, de l'autre côté, à la collerette 13, ce qui permet de constituer un sous-ensemble.

Selon une variante non représentée, l'embout 10 est solidaire de la patte de fixation 20 ; selon cette variante, l'embout 10 présente également une autre collerette 13 en biais coopérant avec la face extérieure de la patte de fixation 20, ici avec la face extérieure de sa creusure 25, en sorte que l'embout 10 est en quelque sorte solidarisé par sertissage à la patte de fixation 20 ; une telle disposition permet d'immobiliser l'embout 10 dans les deux sens quelle que soit l'épaisseur de la cloison qui peut être mince.

Dans la variante selon la figure 3, cette immobilisation dans les deux sens est obtenue par la venue en butée, comme représenté, du corps de l'embout 10 sur le bord de l'ouverture 41 de la cloison 40. Si l'ouverture 41 de la cloison 40 ne conduit pas à une telle disposition, parce que trop grande comme montré sur la figure 7, il est possible de disposer une contre-plaque 120 intermédiaire comportant une ouverture 121 analogue à l'ouverture 41 de la figure 3 ; si nécessaire, un joint d'étanchéité peut être disposé entre la contre-plaque 120 et la cloison 40, ou bien le joint 30 peut s'étendre périphériquement autour du contour de la contre-plaque 120 pour assurer l'étanchéité entre la contre-plaque 120 et la cloison 40 ; en variante, c'est entre ces deux pièces qu'est placé le joint 30.

La figure 8 montre une variante selon laquelle la creusure 25 est ménagée dans la cloison 40 elle-même ; dans ce cas, une bride de fixation 140 est prévue, munie d'une ouverture 141 analogue à l'ouverture 41 de la figure 3 ; ici, l'élément tubulaire 10 est fixé par pincement de la collerette 13 entre la cloison 40 et la bride de fixation 140.

## Revendications

1. Traversée tubulaire de cloison en biais, comportant un élément tubulaire (10) destiné à être fixé à la cloison (40) qui présente une ouverture (41) par laquelle l'élément tubulaire (10) la traverse lorsque la traversée est en place, des moyens portés par l'élément tubulaire (10) étant prévus pour le positionnement de l'élément tubulaire (10) et sa fixation, les moyens de positionnement et fixation étant constitués d'une collerette (13) ménagée sur au moins une partie de la surface extérieure de l'élément tubulaire (10) en étant inclinée par rapport aux génératrices de l'élément tubulaire (10), ladite collerette (13) définissant au moins une portée d'appui, caractérisée par le fait que la portée d'appui coopère avec le fond d'une creusure (25) en étant adaptée à positionner l'élément tubulaire (10).

2. Traversée tubulaire selon la revendication 1, caractérisée par le fait que la fixation de l'élément tubulaire (10) est obtenue par pincement de la collerette (13).

3. Traversée tubulaire selon l'une des revendications 1 ou 2, caractérisée par le fait que la collerette (13) est continue et fermée, en ce sens qu'elle est ménagée tout autour de l'élément tubulaire (10).

4. Traversée tubulaire selon l'une des revendications 1 à 3, caractérisée par le fait que la portée d'appui est plane.

5. Traversée tubulaire selon l'une des revendications 1 à 4, caractérisée par le fait que la profondeur de la creusure (25) est globalement égale à la hauteur de la collerette (13).

6. Traversée tubulaire selon l'une des revendications 1 à 5, caractérisée par le fait que le contour périphérique intérieur de la creusure (25) entoure la collerette (13) en étant globalement de même forme.

7. Traversée tubulaire selon l'une des revendications 1 à 6, caractérisée par le fait que la creusure est ménagée dans la cloison (40) autour de l'ouverture (41) qu'elle présente, la collerette (13) étant adaptée à être pincée entre la cloison (40) et une bride (140).

8. Traversée tubulaire selon l'une des revendications 1 à 6, caractérisée par le fait que la creusure (25) est ménagée dans une patte dite de fixation (20), que comporte la traversée tubulaire, laquelle patte est traversée par l'élément tubulaire (10) grâce à un orifice (14) qu'elle présente et la collerette (13) est pincée entre la patte de fixation (20) et la cloison (40).

9. Traversée tubulaire selon la revendication 8, caractérisée par le fait que l'orifice (14) que présente la patte de fixation (20) pour le passage de l'élément tubulaire (10) est en biais et épouse la périphérie de l'élément tubulaire (10).

10. Traversée tubulaire selon l'une des revendications 1 à 9, caractérisée par le fait qu'un joint d'étanchéité (30) est prévu pour être interposé entre la traversée et la cloison (40).

11. Traversée tubulaire selon la revendication 10, caractérisée par le fait que le joint (30) comporte un passage (31) en biais pour l'élément tubulaire (10).

12. Traversée tubulaire selon l'une des revendications 8 à 11, caractérisée par le fait que la patte de fixation (20) est en forme de U dont les ailes (22) sont prolongées selon des retours (23) globalement parallèles à l'âme (21) du U et dirigés vers l'extérieur dudit U, ladite patte de fixation (20) étant fixée par lesdits retours (23) à la cloison (40) qu'elle est destinée à équiper.

13. Traversée tubulaire selon les revendications 8 et 12 prises conjointement, caractérisée par le fait que la creusure (25) est ménagée dans l'âme (21) du U.

14. Traversée tubulaire selon l'une des revendications 8 à 13, caractérisée par le fait que la patte de fixation (20) est réalisée par emboutissage.

15. Traversée tubulaire selon l'une des revendications 10 ou 11 et la revendication 12, prises conjointement, caractérisée par le fait que l'épaisseur du joint (30) au repos est légèrement supérieure à la hauteur des ailes (22) du U.

16. Traversée tubulaire selon la revendication 15, caractérisée par le fait que l'épaisseur du joint (30) est telle qu'une fois serré il porte sur la périphérie de l'élément tubulaire (10).

17. Traversée tubulaire selon l'une des revendications 15 ou 16, caractérisée par le fait que le joint (30) recouvre la collerette (13) de l'élément tubulaire (10) et l'âme (21) du U.

18. Traversée tubulaire selon l'une des revendications 1 à 17, caractérisé par le fait que l'élément tubulaire (10) présente également une autre collerette (13) en biais coopérant avec la face extérieure de la patte de fixation (20), en sorte que l'élément tubulaire (10) est en quelque sorte solidarisé par sertissage à la patte de fixation (20).

19. Traversée tubulaire selon l'une des revendications 1 à 18, caractérisée par le fait que l'élément tubulaire (10) est un embout.
